# EUROPÄISCHE PATENTSCHRIFT

(11) **EP 2 703 708 B1**
(45) Veröffentlichungstag und Bekanntmachung des Hinweises auf die Patenterteilung: **06.04.2016**
(21) Anmeldenummer: 13182083.9
(22) Anmeldetag: 28.08.2013
(51) Int. Cl.: F16L 37/252

(54) **VERRIEGELBARE ROHR-STECKVERBINDUNG MIT BAJONETTVERSCHLUSS**
LOCKABLE PIPE PLUG CONNECTION WITH BAYONET LOCK
RACCORD VERROUILLABLE À FICHES POUR TUYAUX DOTÉ D'UNE FERMETURE À BAÏONNETTE

(30) Priorität: 29.08.2012 CH 14992012
(43) Veröffentlichungstag der Anmeldung: 05.03.2014
(73) Patentinhaber: vonRoll infratec (investment) ag, 6300 Zug (CH)
(72) Erfinder: Frieden, Carmen, 5608 Stetten (CH); Portmann, Hansjörg, 4563 Gerlafingen (CH)
(74) Vertreter: OK pat AG

(56) Entgegenhaltungen:
- DE-A1- 2 742 567
- GB-A- 191 009 362
- US-A- 935 082
- US-A- 1 029 819
- US-A- 5 301 985
- US-A1- 2011 148 107

## Beschreibung

Die Erfindung betrifft eine verriegelbare Rohr-Steckverbindung mit Bajonettverschluss. Derartige Rohr-Steckverbindungen umfassen typischerweise ein erstes Anschlussrohr mit einer Muffe, ein zweites Anschlussrohr mit einem in die Muffe des ersten Anschlussrohrs einsetzbaren Einsteckteil und eine Bajonettverbindung zwischen Muffe und Einsteckteil der beiden Anschlussrohre. Dabei umfasst eine derartige Bajonettverbindung zumindest einen Ringnutenabschnitt und zumindest einen Stegabschnitt und ist durch gegenseitiges Verdrehen von Muffe und Einsteckteil schliessbar und wieder lösbar ausgebildet. Alle Ringnutenabschnitte der Bajonettverbindung sind jeweils auf einer Seite von einer Einsetzöffnung begrenzt und zumindest einer der Ringnutenabschnitte ist auf der anderen Seite von einem Endanschlag begrenzt. Die Stegabschnitte sind in ihrer Anordnung und in ihren Dimensionen zum Einsetzen durch die Einsetzöffnungen der Ringnutenabschnitte angepasst und in diesen Ringnutenabschnitten gleitend ausgebildet. Zudem umfasst eine derartige Rohr-Steckverbindung eine Vorrichtung zum Verriegeln einer geschlossenen Bajonettverbindung.

Eine Rohr-Steckverbindung mit Bajonettverschluss gemäß dem Oberbegriff von Anspruch 1 ist bekannt aus der US 1 029 819 A.

Eine weitere Rohr-Steckverbindung mit Bajonettverschluss ist beispielsweise aus DE 196 42 329 B4 bekannt. Offenbart ist ein Bajonettverschluss mit Drehanschlag für miteinander zu verbindende Fluidleitungen mit je einem Stecker oder einer Muffe, die alternative Ringnutenabschnitte umfassen können. Diese Ringnutenabschnitte sind durch zwei federnde, radial angeordnete von einem Grundkörper des Steckers oder der Muffe abragende, umfangsmässig gegenüberliegende Haltebügel gebildet, wobei diese Haltebügel über einen elastischen, ausschliesslich an den freien Enden der Haltebügel angebundenen Ring miteinander verbunden sind. Eine Sicherung gegen Verdrehen ist nicht offenbart.

Eine verdrehsichere Rohr-Steckverbindung mit Bajonettverschluss ist beispielsweise aus DE 41 29 397 C1 bekannt. Offenbart ist eine Steckkupplung zum Verbinden eines Schlauches mit einem ein erstes Kupplungsteil bildenden Rohr oder Rohrstutzen, welches wenigstens zwei getrennte, teilweise umlaufende Halterippen umfasst. Der Schlauch ist an einem rohrförmigen zweiten Kupplungsteil befestigt, welches in regelmässigen Abständen angeordnete, sich axial erstreckende Haltearme mit radialen Nasen aufweist, die axial über das erste Kupplungsteil schiebbar und durch Verdrehen hinter den Halterippen zur Anlage bringbar sind. Das zweite Kupplungsteil besteht aus einem die Haltearme aufweisenden ersten Rohrstück und einem in dem ersten Rohstück angeordneten und von diesem getrennt ausgebildeten zweiten Rohrstück. Diese beiden Rohrstücke sind relativ zueinender drehbar und der Schlauch ist an dem zweiten Rohrstück befestigt. Das erste, äussere Rohrstück ist drehbar in einer Ringnut des inneren, zweiten Rohrstücks eingerastet, so dass sich der an den Rohrstutzen dichtend angesetzte Schlauch drehen kann, ohne dass der Bajonettverschluss geöffnet wird.

Weitere verriegelbare Rohr-Steckverbindungen mit Bajonettverschluss sind beispielsweise aus DE 44 20 179 A1 und DE 20 2007 016 485 U1 bekannt. Es handelt sich in beiden Fällen um eine Rohr-Steckverbindung mit einem ersten Anschlussrohr mit einer Muffe, mit einem zweiten Anschlussrohr mit einem in die Muffe des ersten Anschlussrohrs einsetzbaren Einsteckteil, und mit einer Bajonettverbindung zwischen Muffe und Einsteckteil der beiden Anschlussrohre. Diese Bajonettverbindung umfasst zumindest einen Ringnutenabschnitt und zumindest einen Stegabschnitt und ist durch gegenseitiges Verdrehen von Muffe und Einsteckteil schliessbar und wieder lösbar ausgebildet. Alle Ringnutenabschnitte sind auf jeweils einer Seite von einer Einsetzöffnung bzw. von einem Einführkanal begrenzt und zumindest einer der Ringnutenabschnitte ist auf der anderen Seite von einem Endanschlag begrenzt. Die Stegabschnitte sind in ihrer Anordnung und in ihren Dimensionen zum Einsetzen durch die Einsetzöffnungen der Ringnutenabschnitte angepasst und in diesen Ringnutenabschnitten gleitend ausgebildet. Zudem umfassen diese Bajonettverschlüsse je eine Vorrichtung zum Verriegeln einer geschlossenen Bajonettverbindung. Die Bajonettverbindung wird geschlossen, indem die Stegabschnitte zuerst in axialer Richtung in die Einsetzöffnungen bzw. in die Einführkanäle eingeführt und dann durch gegenseitiges Verdrehen von Muffe und Einsteckteil am Ende der Einsetzöffnungen bzw. Einführkanäle in tangentialer Richtung bis zum Endanschlag bewegt werden. Weil jeder der Ringnutenabschnitte bei diesen Bajonettverbindungen eine hinterschnittene Mulde zur Aufnahme eines der Stegabschnitte aufweist, kann anschliessend das Einsteckteil gegenüber der Muffe axial um das Mass der hinterschnittenen Mulde zurückgezogen werden, wobei zwischen Muffe und Einsteckteil eine umlaufende Nut entsteht. Die Bajonettverbindung kann nun erst dann durch gegenseitiges Verdrehen von Muffe und Einsteckteil wieder geöffnet werden, wenn das Einsteckteil gegenüber der Muffe axial um das Mass der hinterschnittenen Mulde hinein geschoben wird. Dieses Einschieben wird dadurch verhindert, dass die umlaufende Nut zwischen Muffe und Einsteckteil durch einen Gummiring (vgl. DE 44 20 179 A1) oder durch einen starren, radial vorgespannten Ring (vgl. DE 20 2007 016 485 U1) ausgefüllt und die Rohr-Steckverbindungen mit Bajonettverschluss dadurch verriegelt wird.

Aufgabe der vorliegenden Erfindung ist es eine alternative Rohr-Steckverbindung mit Bajonettverschluss vorzuschlagen, welche verriegelbar, d.h. gegen Verdrehen gesichert ausgebildet ist. Vorzugsweise ist die Verriegelung der vorgeschlagenen Rohr-Steckverbindung mit Bajonettverschluss auch wieder lösbar ausgebildet.

Diese Aufgabe wird durch die Merkmale des unabhängigen Anspruchs 1 gelöst. Die eingangs beschriebene Rohr-Steckverbindung mit Bajonettverschluss ist erfindungsgemäss dadurch gekennzeichnet, dass die auf die Muffe des ersten Anschlussrohrs aufgesetzte Verriegelungsvorrichtung als die Halterung umfassender, elastischer Ring ausgebildet ist, der die Muffe des Anschlussrohrs in ihrem Umfang vollständig umgibt, und dass das Versperrelement mit dem elastischen Ring der Verriegelungsvorrichtung verbunden ist. Bevorzugte Ausführungsformen und weitere erfinderische Merkmale ergeben sich aus den abhängigen Ansprüchen.

Vorteile der erfindungsgemässen Rohr-Steckverbindung mit Bajonettverschluss umfassen:
- Der Bajonettverschluss wird durch das einschnappende Versperrelement automatisch spätestens dann verriegelt, wenn Muffe und Einsteckteil gegenseitig bis zum Anschlag verdreht werden. Durch diese einfache Wirkungsweise der Verriegelungsvorrichtung wird die Montagezeit der Rohr-Steckverbindung verkürzt.
- Wird ein Abstand zwischen Versperranschlag und Endanschlag gewählt, der grösser ist als die Länge des zu versperrenden Stegabschnitts, so können Muffe und Einsteckteil ohne Öffnen des Bajonettverschlusses und bei gleichzeitigem Beibehalten der Dichtungswirkung einer zwischen Muffe und Einsteckteil angeordneten Ringdichtung gegenseitig so weit verdreht und ausgerichtet werden, bis der versperrte (aber eben nicht ganz blockierte) Stegabschnitt an einem der beiden Anschläge anstösst.
- Eine ringförmig ausgebildete Verriegelungsvorrichtung hat den Vorteil, dass sie zudem als Abdeckung des Ringspalts zwischen Muffe und Einsteckteil ausgebildet sein und das Eindringen von Schmutz in den Ringspalt zwischen Muffe und Einsteckteil und insbesondere in die Einsetzöffnungen der Muffe verhindern oder doch erheblich verringern kann.
- Beim Einsetzen des Einsteckteils in die Muffe, beim Schliessen der Bajonettverbindung und beim Verriegeln der geschlossenen Bajonettverbindung muss die ringförmig ausgebildete Verriegelungsvorrichtung nicht bewegt, d.h. beispielsweise nicht verdreht werden.
- Die ersten drei Ausführungsformen bieten den Vorteil, dass die Verriegelung durch ein einfaches Herausziehen eines Handgriffs der Verriegelungsvorrichtung gelöst und der Bajonettverschluss durch entsprechendes gegenseitiges Zurückverdrehen von Muffe und Einsteckteil ohne Beschädigung wieder geöffnet werden kann.
- Die vierte Ausführungsformen bietet den Vorteil, dass die Verriegelung durch ein Anlegen eines Magneten auf den seitlichen Abschluss der Muffe gelöst und der Bajonettverschluss durch entsprechendes gegenseitiges Zurückverdrehen von Muffe und Einsteckteil ohne Beschädigung wieder geöffnet werden kann.
- Alle gezeigten Ausführungsformen bieten den Vorteil, dass alle zum Verriegeln der geschlossenen Bajonettverbindung notwendigen Elemente bereits vor dem Einsetzen des Einsteckteils in die Muffe am richtigen Platz vorhanden sind und nicht verloren werden können.
- Die ersten drei Ausführungsformen bieten den Vorteil, dass alle zum Entriegeln und Öffnen der geschlossenen Bajonettverbindung notwendigen Elemente permanent am richtigen Platz vorhanden sind und nicht verloren werden können.
- Beim Entriegeln der geschlossenen Bajonettverbindung, beim Öffnen der Bajonettverbindung und beim Herausziehen des Einsteckteils aus der Muffe muss die ringförmig ausgebildete Verriegelungsvorrichtung nicht bewegt, d.h. beispielsweise nicht verdreht werden.
- Die vier vorgestellten Ausführungsformen der Verriegelungsvorrichtung sind elastisch und/oder gefedert ausgeführt und können weder beim Verschliessen/Verriegeln der Bajonettverbindung noch beim Entriegeln/Öffnen derselben beschädigt werden.

Die erfindungsgemässe Rohr-Steckverbindung mit Bajonettverschluss wird mit Hilfe der beiliegenden Zeichnungen näher erläutert. Diese schematischen Querschnitte durch eine Rohr-Steckverbindung mit geschlossenem Bajonettverschluss zeigen bevorzugte und beispielhafte Ausführungsformen, die den Umfang der Erfindung nicht beschränken, obwohl bei den gewählten Beispielen das Versperrelement als beweglicher Zapfen ausgebildet ist und die Muffe des ersten Anschlussrohrs eine in im Wesentlichen radialer Richtung angeordnete und in den ausgewählten Ringnutenabschnitt mündende seitliche Öffnung umfasst, in der das als Zapfen ausgebildete Versperrelement beweglich angeordnet und geführt ist. Dabei zeigt:

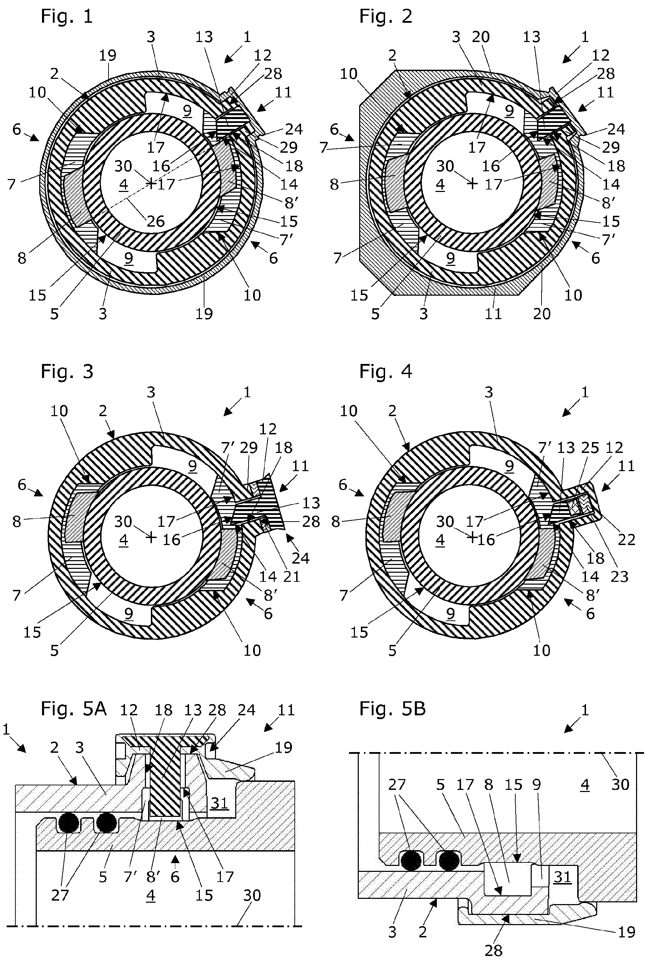

- Fig. 1: eine Rohr-Steckverbindung mit Bajonettverschluss gemäss einer ersten Ausführungsform mit einer Verriegelungsvorrichtung, die als auf die Muffe des ersten Anschlussrohrs aufgesetzter, die Halterung umfassender, elastischer Ring ausgebildet ist;
- Fig. 2: eine Rohr-Steckverbindung mit Bajonettverschluss gemäss einer zweiten Ausführungsform mit einer Verriegelungsvorrichtung, die ringförmig ausgebildet und auf die Muffe des ersten Anschlussrohrs aufgesetzt ist, wobei die Halterung mittels elastischer Teilstücke mit dieser ringförmigen Verriegelungsvorrichtung verbunden ist;
- Fig. 3: eine Rohr-Steckverbindung mit Bajonettverschluss gemäss einer dritten nicht erfindungsgemäßen Ausführungsform mit einer Verriegelungsvorrichtung, die in die Muffe des ersten Anschlussrohrs integriert ist und die eine Halterung umfasst, die mit der Muffe mittels einer auf Zug beanspruchten Federvorrichtung verbunden ist;
- Fig. 4: eine Rohr-Steckverbindung mit Bajonettverschluss gemäss einer vierten nicht erfindungsgemäßen Ausführungsform mit einer Verriegelungsvorrichtung, die in die Muffe des ersten Anschlussrohrs integriert ist, wobei das als Zapfen ausgebildete Versperrelement mit einem seitlichen Abschluss der Muffe mittels einer auf Druck beanspruchten Federvorrichtung verbunden ist;
- Fig. 5: vergrösserte Axial-Teilschnitte durch die Rohr-Steckverbindung mit Bajonettverschluss gemäss der ersten Ausführungsform von Fig. 1, bei der die Verriegelungsvorrichtung auf die Muffe des ersten Anschlussrohrs aufgesetzt und als die Halterung umfassender, elastischer Ring ausgebildet ist, wobei:
Fig. 5A das Versperrelement der Verriegelungsvorrichtung in der Versperrposition bei geschlossener Bajonettverbindung; und
Fig. 5B die von der ringförmig ausgebildeten Verriegelungsvorrichtung abgedeckte Einsetzöffnung in der Muffe des ersten Anschlussrohrs zeigt.

Die Figur 1 zeigt eine Rohr-Steckverbindung 1 mit einem Bajonettverschluss 6 gemäss einer ersten Ausführungsform, bei der die Verriegelungsvorrichtung 11 als auf die Muffe 3 des ersten Anschlussrohrs 2 aufgesetzter, die Halterung 12 umfassender, elastischer Ring 19 ausgebildet ist.

Diese Rohr-Steckverbindung 1 umfasst ein erstes Anschlussrohr 2 mit einer Muffe 3 und ein zweites Anschlussrohr 4 mit einem in die Muffe 3 des ersten Anschlussrohrs 2 einsetzbaren Einsteckteil 5. Diese Rohre 2,4 können beispielsweise aus Metall oder Metall-Legierungen wie z.B. aus Gusseisen, Stahl, rostfreiem Stahl, Messing, Aluminium oder Bronze, aber auch Kunststoff oder einem für den Einsatzzweck äquivalenten und geeigneten Werkstoff ausgebildet sein bzw. eine Kombination dieser Materialien umfassen. Sie können sowohl als gerade, gebogene oder verschlossene (Blindstopfen) Leitungsrohre als auch als Anschluss einer Armatur ausgebildet sein.

Als Armaturen werden im Zusammenhang mit der vorliegenden Erfindung alle Vorrichtungen zum Beeinflussen der Wasserströmung bzw. Gasströmung in Verteilungsnetzen, wie Hydranten, Schieber, Absperrklappen, Ventile, Kugelhahnen, Rückflussverhinderer (wie z.B. Rückstauklappen und Rückschlagventile), Anbohrarmaturen und dergleichen bezeichnet.

Als Gehäuseteile werden im Zusammenhang mit der vorliegenden Erfindung alle Vorrichtungen bezeichnet, die zumindest teilweise mit Medien in Kontakt kommen, die nicht im Leitungssystem transportiert werden. Solche Medien sind beispielsweise die Umgebungsluft, Schüttmaterialien (wie z.B. Erde, Geröll etc.), oder offene Gewässer. Gehäuseteile können beispielsweise als äussere Hülle von Armaturen, als Anschlussstück, Blindstopfen usw. ausgebildet sein.

Diese Rohr-Steckverbindung 1 umfasst zudem eine Bajonettverbindung 6 zwischen Muffe 3 und Einsteckteil 5 der beiden Anschlussrohre 2,4. Dabei umfasst die Bajonettverbindung 6 zumindest einen Ringnutenabschnitt 7,7' und zumindest einen Stegabschnitt 8,8'. Vorzugsweise sind zwei oder mehr Ringnutenabschnitte 7,7' und Stegabschnitte 8,8' einander diametral gegenüberliegend oder in einem regelmässigen Abstand am Umfang von Muffe 3 und Einsteckteil 5 angeordnet.

Eine weitere Möglichkeit der Anordnung der Ringnutenabschnitte 7,7' und Stegabschnitte 8,8' besteht darin, dass diese zum Zweck einer genau definierten, vorzugsweise radialen Ausrichtung der beiden Anschlussrohre 2,4 zueinander mittels einer, vorzugsweise zweier oder mehrerer asymmetrisch angeordneter Ringnutenabschnitte 7,7' und Stegabschnitte 8,8' erreicht wird. Eine solche genau definierte Ausrichtung kann alternativ auch über zwei oder mehr regelmässig angeordnete Ringnutenabschnitte 7,7' und Stegabschnitte 8,8', welche jedoch eine unterschiedliche Ringnutenabschnitt- und Stegabschnittlänge aufweisen, erreicht werden (beides nicht gezeigt).

Die Bajonettverbindung 6 ist durch gegenseitiges Verdrehen von Muffe 3 und Einsteckteil 5 schliessbar und wieder lösbar ausgebildet. Alle Ringnutenabschnitte 7,7' sind auf jeweils einer Seite von einer Einsetzöffnung 9 begrenzt, wobei diese Einsetzöffnungen 9 in ihrer Dimension so gewählt sind, dass beim Einsetzen eines Einsteckteils 5 in eine Muffe 3 alle Stegabschnitte 8,8' individuell durch eine der Einsetzöffnungen 9 einführbar sind. Zumindest einer der Ringnutenabschnitte 7,7' einer Bajonettverbindung 6 ist auf der anderen Seite von einem Endanschlag 10 begrenzt. Die Stegabschnitte 8,8' sind in ihrer Anordnung und in ihren Dimensionen zum Einsetzen durch die Einsetzöffnungen 9 der Ringnutenabschnitte 7,7' angepasst und in diesen Ringnutenabschnitten 7,7' gleitend ausgebildet.

Zudem umfasst die Bajonettverbindung 6 eine Vorrichtung 11 zum Verriegeln derselben. Die erfindungsgemässe Verriegelungsvorrichtung 11 umfasst eine Halterung 12 mit zumindest einem daran befestigten, beweglichen Versperrelement 13. Dabei ist die Halterung 12 zum Ausüben einer Federkraft ausgebildet. Das zumindest eine Versperrelement 13 ist in mindestens einem ausgewählten Ringnutenabschnitt 7,7' anordenbar und umfasst einen Versperranschlag 14, der vom Endanschlag 10 des ausgewählten Ringnutenabschnitts 7,7' um mindestens die Länge eines zu versperrenden Stegabschnitts 8,8' beabstandet ist. Dabei ist jedes Versperrelement 13 so ausgebildet und angeordnet, dass es im geschlossenen Zustand der Bajonettverbindung 6 und bedingt durch die Federkraft der Halterung 12 eine vorzugsweise selbsthemmende Versperrposition im ausgewählten Ringnutenabschnitt 7,7' einnimmt. Sobald ein zu versperrender Stegabschnitt 8,8' einer geschlossenen Bajonettverbindung 6 sich in diesem ausgewählten Ringnutenabschnitt 7,7' befindet und das jeweilige Versperrelement 13 die Versperrposition im ausgewählten Ringnutenabschnitt 7,7' eingenommen hat, ist dieser Stegabschnitt 8,8' des Einsteckteils 5 zwischen dem Versperranschlag 14 und dem Endanschlag 10 versperrt; die Bajonettverbindung 6 ist dadurch verriegelt bzw. gegen nicht beabsichtigtes Lösen der Verbindung durch Verdrehen gesichert.

Wird ein Abstand zwischen Versperranschlag 14 und Endanschlag 10 gewählt, der praktisch gleich oder nur unwesentlich grösser ist als die Länge des zu versperrenden Stegabschnitts 8,8', so sind Muffe 3 und Einsteckteil 5 der beiden Anschlussrohre 2,4 gegen ein gegenseitiges Verdrehen blockiert. Wird jedoch ein Abstand zwischen Versperranschlag 14 und Endanschlag 10 gewählt, der grösser ist als die Länge des zu versperrenden Stegabschnitts 8,8', so können Muffe 3 und Einsteckteil 5 ohne Öffnen des Bajonettverschlusses 6 und bei gleichzeitigem Beibehalten der Dichtungswirkung zumindest einer zwischen Muffe 3 und Einsteckteil 5 angeordneten Ringdichtung 27, gegenseitig soweit verdreht und ausgerichtet werden, bis der zumindest eine versperrte (aber eben nicht ganz blockierte) Stegabschnitt 8,8' an einem der beiden Anschläge 14,10 anstösst.

Bei allen gezeigten Ausführungsformen der verriegelbaren Rohr-Steckverbindung 1 mit Bajonettverschluss 6 sind die Ringnutenabschnitte 7,7' in der Muffe 3 des ersten Anschlussrohrs 2 und die Stegabschnitte 8,8' auf einem äusseren Umfang 15 des Einsteckteils 5 angeordnet.

Vorzugsweise ist der Versperranschlag 14 des Versperrelements 13 im Wesentlichen radial in Bezug auf das Einsteckteil 5 ausgerichtet. Der Versperranschlag 14 weist bevorzugt eine Höhe auf, die genügt, um zu verhindern, dass der versperrte Stegabschnitt 8,8' durch eine Drehbewegung zumindest eines der beiden Anschlussrohre 2,4 einfach wieder in seine Einsetzöffnung 9 gelangen und sich die Bajonettverbindung 6 dadurch lösen kann. Diese Bewegung könnte einerseits unbeabsichtigt durch einen oder mehrere äussere Einflüsse (z.B. durch einen Monteur, eine Erdverschiebungen oder Erosion) oder beispielsweise durch systembedingte Einflüsse (wie Vibrationen oder Druckschläge) der Rohrleitung und/oder einer an die Rohrleitung angeschlossenen Armatur provoziert werden. Eine minimale Höhe des Versperranschlags 14 ist zur zuverlässigen Versperrung eines Bajonettverschlusses 6 notwenig und entspricht vorzugsweise zumindest einem Viertel der Tiefe oder der Breite des ausgewählten Ringnutenabschnitts 7,7'. Das Vorsehen von zwei Versperrelementen 13 pro Verriegelungsvorrichtung 11 erhöht diese Sicherheit zusätzlich.

Ebenfalls wird bevorzugt, das Einsteckteil 5 so herzustellen, dass die Flanke des zu versperrenden Stegabschnitts 8,8', die gegen den Versperranschlag 14 gerichtet ist, nur minimale Radien aufweist und praktisch radial ausgerichtet ist. Wird das Einsteckteil 5 gegossen (z.B. aus Gusseisen) oder spritzgegossen (z.B. aus Kunststoff), so wird die Formtrennung 26 vorzugsweise so gelegt, dass sie durch die Flanke des zu versperrenden Stegabschnitts 8,8' verläuft, die gegen den Versperranschlag 14 gerichtet ist.

Alle gezeigten Ausführungsformen umfassen ein bewegliches Versperrelement 13, das im Wesentlichen radial in Bezug auf das Einsteckteil 5 ausgerichtet ist und bei dem sich die Höhe des Versperranschlags 14 auf die Tiefe des ausgewählten Ringnutenabschnitts 7,7' bezieht. Abweichend von dieser bevorzugten Anordnung können zwei oder mehr im Wesentlichen radial in Bezug auf das Einsteckteil 5 ausgerichtete Versperrelemente 13 pro Verriegelungsvorrichtung 11 vorgesehen sein (nicht gezeigt).

Das erfindungsgemässe Versperrelement 13 umfasst vorzugsweise eine der Einsetzöffnung 9 zugewandte schiefe, gewölbte (oder einer Kombination dieser beiden Formen entsprechende) Ebene 16, die im Wesentlichen vom Niveau einer Oberfläche 17 des ausgewählten Ringnutenabschnitts 7,7' um die Höhe des Versperranschlags 14 ansteigend ausgebildet ist. Dabei ist in den gezeigten Ausführungsformen diese Oberfläche 17 mit dem Grund des Ringnutenabschnitts 7,7' gleichzusetzen; in den nicht gezeigten Varianten würde diese Oberfläche 17 durch eine Flanke des Ringnutenabschnitts 7,7' gebildet.

Speziell bevorzugt wird eine Rohr-Steckverbindung 1, bei der das Versperrelement 13 bzw. die Versperrelemente 13 als beweglicher Zapfen ausgebildet sind, wobei die Muffe 3 des ersten Anschlussrohrs 2 zumindest eine in im Wesentlichen radialer Richtung angeordnete und in den ausgewählten Ringnutenabschnitt 7,7' mündende seitliche Öffnung 18 umfasst, in welcher ein als Zapfen ausgebildetes Versperrelement 13 beweglich angeordnet und geführt ist.

Das erfindungsgemässe Versperrelement 13 umfasst vorzugsweise die bereits erwähnte, der Einsetzöffnung 9 zugewandte, schiefe, gewölbte (oder einer Kombination dieser beiden Formen entsprechende) Ebene 16.

Ein als beweglicher Zapfen ausgebildetes Versperrelement 13 ist vorzugweise aus einem thermoplastischen Kunststoff oder einem Verbundwerkstoff mit genügender Steifigkeit, Festigkeit und Härte sowie guten Gleiteigenschaften ausgebildet, wobei z.B. Materialien wie POM (Polyoxymethylen), PA (Polyamid) oder PTFE (Polytetrafluorethylen) speziell bevorzugt sind. Alternativ sind aber auch Versperrelemente 13 denkbar, die aus Metallen oder Metall-Legierungen wie z.B. aus rostfreiem Stahl, Aluminium, Bronze bestehen oder zumindest solche Metalle oder Metall-Legierungen umfassen. Generell sind Metalle mit einer möglichst hohen Unempfindlichkeit gegenüber Oxidation oder entsprechend beschichtete Metalle bevorzugt. Bei dieser Rohr-Steckverbindung 1 ist die Verriegelungsvorrichtung 11 auf die Muffe 3 des ersten Anschlussrohrs 2 aufgesetzt und erfindungsgemäß als die Halterung 12 umfassender, elastischer Ring 19 ausgebildet. Dieser elastische Ring 19 ist bevorzugt aus Gummi, vulkanisierbaren Elastomeren, wie z.B. EPDM (Ethylen-Propylen-Dien-Kautschuk), NBR (Akrylnitril-Butadien-Kautschuk), NR (Naturkautschuk) oder CR (ChloroprenKautschuk) oder thermoplastischen Elastomeren (TPE) hergestellt. Der elastische Ring 19 kann auch als Metallring aus einem Federstahl oder als Spiralring (mit oder ohne Beschichtung) mit einem der vorgenannten Elastomere ausgebildet sein.

Die Halterung 12 ist hier teilweise als Handgriff 24 ausgebildet (vgl. die seitlichen Einbuchtungen zum sicheren Greifen mit den Fingern) und kann durch einen Monteur einfach von Hand um mindestens den Betrag der Höhe des Versperranschlags 14 entgegen der Federkraft der Halterung 12 angehoben werden. Sobald das Versperrelement 13 in der seitlichen Öffnung 18 soweit angehoben ist, dass der ganze Versperranschlag 14 und damit auch das Versperrelement 13 aus dem ausgewählten Ringnutenabschnitt 7,7' entfernt ist, kann die Bajonettverbindung 6 durch gegenseitiges Drehen von Muffe 3 und Einsteckteil 5 geöffnet werden.

Gegenseitiges Drehen beim Schliessen und Öffnen der Bajonettverbindung 6 heisst im Zusammenhang mit der hier vorliegenden Erfindung, dass zumindest die Muffe 3 oder das Einsteckteil 5 allein oder beide Anschlussrohre 2,4 mit Muffe 3 bzw. Einsteckteil 5 gleichzeitig bewegt, also um die Rohrachse 30 gegenseitig verdreht werden.

Die Figur 2 zeigt eine Rohr-Steckverbindung 1 mit Bajonettverschluss 6 gemäss einer zweiten Ausführungsform, bei der die Verriegelungsvorrichtung 11 ringförmig ausgebildet und auf die Muffe 3 des ersten Anschlussrohrs 2 aufgesetzt ist, wobei die Halterung 12 mittels elastischer Teilstücke 20 mit dieser ringförmigen Verriegelungsvorrichtung 11 verbunden ist. Mit dieser Figur 2 wird deutlich gemacht, dass jede beliebige Form der Verriegelungsvorrichtung 11 als Ring bezeichnet werden kann, falls die Verriegelungsvorrichtung 11 den Umfang der Muffe 3, des Anschlussrohrs 2 vollständig umgibt. Dabei kann sowohl die Dicke als auch das Material dieser speziellen ringförmigen Verriegelungsvorrichtung 11 variieren und sämtliche Kombinationen der zu der Fig. 1 genannten Materialien umfassen.

Die Figur 3 zeigt eine Rohr-Steckverbindung 1 mit Bajonettverschluss 6 gemäss einer dritten nicht erfindungsgemäßen Ausführungsform mit einer Verriegelungsvorrichtung 11, die in die Muffe 3 des ersten Anschlussrohrs 5 integriert ist und die eine Halterung 12 umfasst, die mit der Muffe 3 mittels einer auf Zug beanspruchten Federvorrichtung 21 verbunden ist. Diese Ausführungsform der Rohr-Steckverbindung 1 mit Bajonettverschluss 6 ist vorzugsweise als Ganzmetallkonstruktion ausgelegt, wobei das Versperrelement 13 bevorzugt aus rostfreiem Stahl gefertigt ist. Das Versperrelement 13 ist an der als Handgriff 24 ausgeführten Halterung 12 befestigt oder (wie dargestellt) Teil dieser Halterung 12. Mittels einer vorzugsweise ebenfalls ganz aus Metall bestehenden Federvorrichtung 21 ist der Handgriff 24 mit der Aussenfläche 28 eines auf die Muffe aufgesetzten Rings 29 verbunden.

Die Figur 4 zeigt eine Rohr-Steckverbindung 1 mit Bajonettverschluss 6 gemäss einer vierten nicht erfindungsgemäßen Ausführungsform mit einer Verriegelungsvorrichtung 11, die in die Muffe 3 des ersten Anschlussrohrs 2 integriert ist, wobei das als Zapfen, Stift oder Keil ausgebildete Versperrelement 13 mit einem seitlichen Abschluss 22 der Muffe 3 mittels einer auf Druck beanspruchten Federvorrichtung 23 verbunden ist. Diese Ausführungsform der Rohr-Steckverbindung 1 mit Bajonettverschluss 6 ist vorzugsweise als Ganzmetallkonstruktion ausgelegt, wobei das Versperrelement 13 bevorzugt aus rostfreiem Stahl gefertigt ist und vorzugsweise ein Rückzieh-Element 24,25 umfasst, das als magnetisierbares Material 25 ausgebildet und in das als Zapfen, Stift oder Keil ausgebildete Versperrelement 13 integriert ist. Zum Entriegeln wird bevorzugt ein Magnet als Rückzieh-Element verwendet, mit welchem das magnetisierbare Material 25 im Zapfen entgegen der Kraft der Federvorrichtung 23 und gegen den seitlichen Abschluss 22 gezogen wird. Im Unterschied zu dieser vierten Ausführungsform umfasst jede der ersten drei Ausführungsformen vorzugsweise ein Rückzieh-Element 24,25 in der Form des Handgriffs 24 der Halterung 12.

Speziell bevorzugt ist somit eine Rohr-Steckverbindung 1, bei der die Verriegelungsvorrichtung 11 ein Rückzieh-Element 24,25 umfasst, mit welchem das Versperrelement 13 entgegen der Federkraft der Halterung 12 aus der Versperrposition im ausgewählten Ringnutenabschnitt 7,7' wegbewegbar ist. Der sich in diesem ausgewählten Ringnutenabschnitt 7,7' befindliche Stegabschnitt 8,8' des Einsteckteils 5 ist durch das Wegbewegen des Versperrelements 13 nicht mehr zwischen dem Versperranschlag 14 und dem Endanschlag 10 versperrt und die Bajonettverbindung 6 ist dadurch wieder lösbar.

Das speziell bevorzugte Anordnen eines Rückzieh-Elements 24,25 in der Verriegelungsvorrichtung 11 ermöglicht es somit, das Versperrelement 13 entgegen der Federkraft der Halterung 12 aus der Versperrposition im ausgewählten Ringnutenabschnitt 7,7' weg zu bewegen. Dadurch versperrt das sich in seiner Ruhe- und Versperrposition in diesem ausgewählten Ringnutenabschnitt 7,7' befindliche Versperrelement 13 bzw. dessen Versperranschlag 14 nicht mehr im ausgewählten Ringnutenabschnitt 7,7' und die Bajonettverbindung 6 kann unbeschädigt wieder geöffnet werden. Ein mehrfaches Schliessen und Verriegeln sowie ein mehrfaches Entriegeln und Öffnen der Bajonettverbindung 6 ist ohne Weiteres und ohne Beschädigung der Verriegelungsvorrichtung 11 oder der Bajonettverbindung 6 selbst möglich.

Die Figur 5 zeigt vergrösserte Axial-Teilschnitte durch die Rohr-Steckverbindung 1 mit Bajonettverschluss 6 gemäss der ersten Ausführungsform von Fig. 1. Die Verriegelungsvorrichtung 11 ist als auf die Muffe 3 des ersten Anschlussrohrs 2 aufgesetzter und als die Halterung 12 umfassender, elastischer Ring 19 ausgebildet. Die Fig. 5A zeigt das Versperrelement 13 der Verriegelungsvorrichtung 11 in der Versperrposition (= Ruheposition) bei geschlossener Bajonettverbindung 6. Das Versperrelement 13 ist hier vorzugsweise mittels Umspritzen mit dem elastischen Ring 19 verbunden. Andere Verbindungsarten umfassen beispielsweise das Hinterspritzen, Nieten oder Kleben. Die hier gezeigten Ringdichtungen 27 sind vorzugsweise zwei parallel zu einander und vorzugsweise in separaten Ringnuten angeordnete Dichtungsringe 27. Diese Dichtungsringe 27 stellen eine dichtende Verbindung zwischen der Muffe 3 des ersten Anschlussrohrs 2 und dem Einsteckteil 5 des zweiten Anschlussrohrs 4 bereit. Egal was für eine gegenseitige radiale Position Muffe 3 und Einsteckteil 5 im geschlossenen und verriegelten oder sogar blockierten Zustand des Bajonettverschlusses 6 einnehmen, eine sichere Abdichtung der erfindungsgemässen Rohr-Steckverbindung 1 ist jederzeit gewährleistet.

Im Gegensatz zu der Fig. 1 ist hier in der Fig. 5A der elastische, die Halterung 12 umfassende Ring 19 direkt auf die Aussenfläche 28 der Muffe 3 aufgelegt, ohne dass diese Muffe 3 einen auf die Muffe aufgesetzten Ring 29 aufweisen würde (vgl. auch Fig. 2 und 3). Gut sichtbar in Fig. 5A ist zudem das Abdecken des Ringspalts 31 zwischen Muffe 3 und Einsteckteil 5 durch den auf die Muffe 3 des ersten Anschlussrohrs 2 aufgesetzten und die Halterung 12 umfassenden, elastischen Ring 19.

Die Fig. 5B zeigt die von der ringförmig ausgebildeten Verriegelungsvorrichtung 11 abgedeckte Einsetzöffnung 9 in der Muffe 3 des ersten Anschlussrohrs 2. Gut sichtbar ist auch hier der auf die Muffe 3 des ersten Anschlussrohrs 2 aufgesetzte und die Halterung 12 umfassende, elastische Ring 19. Dieser elastische Ring 19 weist eine umlaufende und im Wesentlichen den Dimensionen der Muffe 3 angepasste Vertiefung auf, so dass er unverlierbar dem Umfang der Aussenfläche 28 der Muffe 3 anliegt.

Als Ergänzung zu der in Fig. 3 oder Fig. 4 gezeigten Verriegelungsvorrichtung 11 kann zusätzlich ein elastischer Abdeckring vorgesehen sein, der den Ringspalt 31 zwischen Muffe 3 und Einsteckteil 5 der beiden Anschlussrohre 2,4 abdeckt und der im Wesentlichen gleich ausgebildet ist, wie der elastische Ring 19 (vgl. Fig. 1 und 5). Allerdings ist bevorzugt, dass dieser zusätzliche elastische Abdeckring im Bereich der Verriegelungsvorrichtung 11 mit dem Versperrelement 13 bzw. im Bereich des seitlichen Abschlusses 22 eine Aussparung aufweist, durch welche der Handgriff 24 bzw. der Abschluss 22 über diesen vorzugsweise auf die Muffe 3 aufgesetzten, zusätzlichen elastischen Abdeckring heraus steht (nicht gezeigt).

In allen Figuren betreffen dieselben Bezugszeichen die gleichen Elemente, auch wenn diese nicht in jedem Fall ausführlich beschrieben sind. Beliebige Kombinationen der für die unterschiedlichen Ausführungsformen gezeigten oder beschriebenen Elemente gehören im Rahmen der Patentansprüche zum Umfang der vorliegenden Erfindung.

Entsprechend den vorstehenden Ausführungen können ausgewählte Bajonettverbindungen 6 innerhalb solcher Armaturen zum Beeinflussen der Wasserströmung bzw. Gasströmung in Verteilungsnetzen, wie beispielsweise die Verbindung zwischen einem Oberteil bzw. einer Einbaute eines Schiebers mit seinem Unterteil entsprechend der erfindungsgemässen Rohr-Steckverbindung 1 ausgebildet sein und ebenfalls eine Vorrichtung 11 zum Verriegeln der Bajonettverbindung 6 aufweisen. Ein solches Schieberoberteil ist üblicherweise als Gehäuse oder Gehäuseteil zur Aufnahme eines Betätigungselementes einer Armatur, z.B. in Form einer Spindel, ausgebildet. Generell können praktisch beliebige Gehäuseteile mit einer erfindungsgemäss verriegelbaren Bajonettverbindung 6 aneinander gekoppelt werden.

Auch diese Verriegelungsvorrichtung 11 umfasst eine Halterung 12 mit einem daran befestigten beweglichen Versperrelement 13. Zudem können auch weitere Anschlüsse an den Armaturen, wie z.B. Seitenabgänge bei Hydranten entsprechend der erfindungsgemässen Rohr-Steckverbindung 1 ausgebildet sein. Auch das sporadische oder permanente Anschliessen von Zusatzgeräten oder Zusatzeinrichtungen (wie beispielsweise Anbohrgeräte) direkt an das Leitungsnetz (beispielsweise bei einer Anbohrschelle, einem Rohr- oder Formstück) oder im Bereich der Armaturen, kann unter Verwendung einer oder mehrerer erfindungsgemässen Rohr-Steckverbindungen 1 erfolgen. Dasselbe gilt für das Anbringen von Abschlussdeckeln und anderer Leitungselemente, wie z.B. von Rohr- oder Formstücken.

Alles im Zusammenhang mit der vorliegenden Erfindung über Wasserverteilungsnetze, Armaturen und Bajonettverbindungen Gesagte, gilt sinngemäss auch für Gasverteilungsnetze, deren Armaturen und Bajonettverbindungen.

**Bezugszeichen**

| | | | |
|---|---|---|---|
| 1 | Rohr-Steckverbindung | 16 | schiefe Ebene |
| 2 | erstes Anschlussrohr | 17 | Oberfläche |
| 3 | Muffe von 2 | 18 | seitliche Öffnung |
| 4 | zweites Anschlussrohr | 19 | elastischer Ring |
| 5 | Einsteckteil von 4 | 20 | elastische Teilstücke |
| 6 | Bajonettverbindung, Bajonettverschluss | 21 | Federvorrichtung auf Zug beansprucht |
| 7 | Ringnutenabschnitt | 22 | seitlicher Abschluss von 3 |
| 7' | ausgewählter Ringnutenabschnitt | 23 | Federvorrichtung auf Druck beansprucht |
| 8 | Stegabschnitt | | |
| 8' | zu versperrender, versperrter Stegabschnitt | 24 | Handgriff |
| | | 25 | magnetisierbares Material |
| 9 | Einsetzöffnung | 26 | Formtrennung von 5 |
| 10 | Endanschlag | 27 | Dichtungsring, Ringdichtung |
| 11 | Verriegelungsvorrichtung | 28 | Aussenfläche von Muffe 3 oder von Ring 29 |
| 12 | Halterung | | |
| 13 | Versperrelement | 29 | auf Muffe 3 aufgesetzter Ring |
| 14 | Versperranschlag | 30 | Rohrachse |
| 15 | äusserer Umfang von 5 | 31 | Ringspalt |

## Patentansprüche

1. Rohr-Steckverbindung (1) umfassend:
(a) ein erstes Anschlussrohr (2) mit einer Muffe (3);
(b) ein zweites Anschlussrohr (4) mit einem in die Muffe (3) des ersten Anschlussrohrs (2) einsetzbaren Einsteckteil (5);
(c) eine Bajonettverbindung (6) zwischen Muffe (3) und Einsteckteil (5) der beiden Anschlussrohre (2,4), wobei die Bajonettverbindung (6) zumindest einen in der Muffe (3) des ersten Anschlussrohrs (2) angeordneten Ringnutenabschnitt (7,7') und zumindest einen auf einem äusseren Umfang (15) des Einsteckteils (5) angeordneten Stegabschnitt (8,8') umfasst und durch gegenseitiges Verdrehen von Muffe (3) und Einsteckteil (5) schliessbar und wieder lösbar ausgebildet ist, wobei alle Ringnutenabschnitte (7,7') auf jeweils einer Seite von einer Einsetzöffnung (9) begrenzt sind und zumindest einer der Ringnutenabschnitte (7,7') auf der anderen Seite von einem Endanschlag (10) begrenzt ist, und wobei die Stegabschnitte (8,8') in ihrer Anordnung und in ihren Dimensionen zum Einsetzen durch die Einsetzöffnungen (9) der Ringnutenabschnitte (7,7') angepasst und in diesen Ringnutenabschnitten (7,7') gleitend ausgebildet sind; und
(d) eine Vorrichtung (11) zum Verriegeln einer geschlossenen Bajonettverbindung (6), wobei die Verriegelungsvorrichtung (11) auf die Muffe (3) des ersten Anschlussrohrs (2) aufgesetzt ist und eine Halterung (12) mit einem daran befestigten beweglichen Versperrelement (13) umfasst, wobei die Halterung (12) zum Ausüben einer Federkraft ausgebildet ist, und wobei das Versperrelement (13) als beweglicher Zapfen ausgebildet ist, der in einem ausgewählten Ringnutenabschnitt (7') anordenbar ist und einen Versperranschlag (14) umfasst, der vom Endanschlag (10) des ausgewählten Ringnutenabschnitts (7') um mindestens die Länge eines zu versperrenden Stegabschnitts (8') beabstandet ist, wobei das als Zapfen ausgebildete Versperrelement (13) in einer in im Wesentlichen radialer Richtung angeordneten und in den ausgewählten Ringnutenabschnitt (7') mündenden seitlichen Öffnung (18) der Muffe (3) beweglich angeordnet und geführt ist, sodass es im geschlossenen Zustand der Bajonettverbindung (6) und bedingt durch die Federkraft der Halterung (12), eine Versperrposition im ausgewählten Ringnutenabschnitt (7') einnimmt und ein sich in diesem ausgewählten Ringnutenabschnitt (7') befindlicher Stegabschnitt (8') des Einsteckteils (5) zwischen dem Versperranschlag (14) und dem Endanschlag (10) versperrt und die Bajonettverbindung (6) dadurch verriegelt bzw. gegen Verdrehen gesichert ist,
**dadurch gekennzeichnet, dass** die auf die Muffe (3) des ersten Anschlussrohrs (2) aufgesetzte Verriegelungsvorrichtung (11) als die Halterung (12) umfassender, elastischer Ring (19) ausgebildet ist, der die Muffe (3) des Anschlussrohrs (2) in ihrem Umfang vollständig umgibt, und dass das Versperrelement (13) mit dem elastischen Ring (19) der Verriegelungsvorrichtung (11) verbunden ist.

2. Rohr-Steckverbindung (1) nach Anspruch 1,
**dadurch gekennzeichnet, dass** der elastische Ring (19) der Verriegelungsvorrichtung (11) als Metallring mit einem Elastomer ausgebildet ist, wobei die Halterung (12) mittels elastischer Teilstücke (20) mit dieser ringförmigen Verriegelungsvorrichtung (11) verbunden ist.

3. Rohr-Steckverbindung (1) nach Anspruch 1 oder 2,
**dadurch gekennzeichnet, dass** der Versperranschlag (14) des Versperrelements (13) im Wesentlichen radial in Bezug auf das Einsteckteil (5) ausgerichtet ist und eine Höhe aufweist, die zumindest einem Viertel der Tiefe oder Breite des ausgewählten Ringnutenabschnitts (7') entspricht, wobei das Versperrelement (13) eine der Einsetzöffnung (9) zugewandte schiefe Ebene (16) umfasst, die im Wesentlichen vom Niveau einer Oberfläche (17) des ausgewählten Ringnutenabschnitts (7') um die Höhe des Versperranschlags (14) ansteigend ausgebildet ist.

4. Rohr-Steckverbindung (1) nach einem der vorhergehenden Ansprüche,
**dadurch gekennzeichnet, dass** der elastische, die Halterung (12) umfassende Ring (19) der Verriegelungsvorrichtung (11) direkt auf eine Aussenfläche (28) der Muffe (3) aufgelegt ist und einen Ringspalt (31) zwischen Muffe (3) und Einsteckteil (5) abdeckt.

5. Rohr-Steckverbindung (1) nach Anspruch 4,
**dadurch gekennzeichnet, dass** der elastische Ring (19) eine umlaufende und im Wesentlichen den Dimensionen der Muffe (3) angepasste Vertiefung aufweist, so dass er unverlierbar dem Umfang der Aussenfläche (28) der Muffe 3 anliegt.

6. Rohr-Steckverbindung (1) nach einem der vorhergehenden Ansprüche,
**dadurch gekennzeichnet, dass** die Verriegelungsvorrichtung (11) ein Rückzieh-Element (24,25) umfasst, mit welchem das Versperrelement (13) entgegen der Federkraft der Halterung (12) aus der Versperrposition im ausgewählten Ringnutenabschnitt (7') wegbewegbar ist,
**und dass** der sich in diesem ausgewählten Ringnutenabschnitt (7') befindliche Stegabschnitt (8') des Einsteckteils (5) durch das Wegbewegen des Versperrelements (13) nicht mehr zwischen dem Versperranschlag (14) und dem Endanschlag (10) versperrt und die Bajonettverbindung (6) dadurch wieder lösbar ist.

7. Rohr-Steckverbindung (1) nach Anspruch 6,
**dadurch gekennzeichnet, dass** das Rückzieh-Element als Handgriff (24) der Halterung (12) ausgebildet ist.

8. Rohr-Steckverbindung (1) nach einem der vorhergehenden Ansprüche,
**dadurch gekennzeichnet, dass** das erste Anschlussrohr (2) und/oder das zweite Anschlussrohr (4) als Gehäuseteil oder Einbaute einer Armatur zum Beeinflussen der Wasserströmung bzw. Gasströmung in Verteilungsnetzen ausgebildet sind.

9. Rohr-Steckverbindung (1) nach Anspruch 8,
**dadurch gekennzeichnet, dass** die Armatur ausgewählt ist aus einer Gruppe von Vorrichtungen zum Beeinflussen der Wasserströmung bzw. Gasströmung in Verteilungsnetzen, die Hydranten, Schieber, Absperrklappen, Ventile, Kugelhahnen, Rückflussverhinderer und Anbohrarmaturen umfasst.

10. Rohr-Steckverbindung (1) nach Anspruch 8 oder 9,
**dadurch gekennzeichnet, dass** das Gehäuseteil oder ein daran anschliessbares Anschlussrohr (2,4), Anschlussstück oder Blindstopfen die Muffe (3) umfasst, auf welche die Verriegelungsvorrichtung (11) aufgesetzt bzw. in welche die Verriegelungsvorrichtung (11) integriert ist.

11. Rohr-Steckverbindung (1) nach Anspruch 8 oder 9,
**dadurch gekennzeichnet, dass** das Gehäuseteil oder ein daran anschliessbares Anschlussrohr (2,4) bzw. die beiden Anschlussrohre (2,4) zum Zweck einer gegenseitig definierten radialen Ausrichtung zwei oder mehrerer asymmetrisch angeordnete Ringnutenabschnitte (7,7') und entsprechende Stegabschnitte (8,8') umfassen.

12. Rohr-Steckverbindung (1) nach Anspruch 8 oder 9,
**dadurch gekennzeichnet, dass** das Gehäuseteil oder ein daran anschliessbares Anschlussrohr (2,4) bzw. die beiden Anschlussrohre (2,4) zum Zweck einer gegenseitig definierten radialen Ausrichtung zwei oder mehr regelmässig angeordnete Ringnutenabschnitte (7,7') und Stegabschnitte (8,8') mit einer unterschiedlichen Länge der Ringnutenabschnitte (7,7') und mit einer entsprechenden unterschiedlichen Länge der Stegabschnitte (8,8') aufweisen.

## Claims

1. A pipe plug connection (1) comprising:
a) a first connector pipe (2) having a socket (3);
b) a second connector pipe (4) having an insertion means (5), which is insertable into the socket (3) of the first connector pipe(2);
c) a bayonet connection (6) between said socket (3) and said insertion means (5) of said connector pipes (2,4), wherein the bayonet connection (6) comprises at least one ring groove section (7,7'), which is arranged in the socket (3) of the first connector pipe (2), and at least one bar section (8,8'), which is arranged on an outer circumference (15) of the insertion means (5), and is configured to be lockable and detachable by means of a reciprocal rotation between said socket (3) and insertion means (5), wherein each of said ring groove sections (7,7') are delimited on a side of an insertion opening (9), respectively, and at least one of said ring groove sections (7,7') is delimited on the other side from an end stop (10), and wherein the bar sections (8,8') are arranged and dimensioned such to be inserted through the insertion openings (9) of the ring groove sections (7,7') and are configured slidable in said ring groove sections (7,7'); and
d) an apparatus (11) for locking of a closed bayonet connection (6), wherein the locking apparatus (11) is fitted on the socket (3) of the first connector pipe (2) and comprises a support (12) having a movable locking element (13), which is connected to the support (12), wherein the support (12) is configured to exert a spring force, and wherein the locking element (13) is configured as a movable pin, which is configured to be arranged into a selected ring groove section (7'), and comprises a locking stop (14), which is spaced apart from the end stop (10) of the selected ring groove section (7') by at least the length of a bar section (8'), which is to be locked, wherein the locking element (13), which is configured as a pin, is arranged to be movable and is guided in a lateral opening (18) of the socket (3), which is arranged in a radial direction, in particular, and opens out into the selected ring groove section (7'), such that it, in a closed state of the bayonet connection (6) and due to the spring force of the support (12), assumes a locking position in the selected ring groove section (7'), and wherein a bar section (8') of the insertion means (5), which is positioned in the selected ring groove section (7'), locks between the locking stop (14) and the end stop (10), and thus locks the bayonet connection (6) or rather locks against a rotation thereof,
**characterized in that** the locking apparatus (11), which is fitted on the socket (3) of the first connection pipe (2), is formed as an elastic ring (19), which comprises the support (12), which completely surrounds the socket (3) of the connection pipe (2), and **in that** the locking element (13) is connected to the elastic ring (19) of the locking apparatus (11).

2. The pipe plug connection (1) according to Claim 1,
**characterized in that** the elastic ring (19) of the locking apparatus (11) is configured as a metal ring comprising an elastomer, wherein the support (12) is connected to said ring-like locking apparatus (11) by means of elastic parts (20).

3. The pipe plug connection (1) according to Claim 1 or 2,
**characterized in that** the locking stop (14) of the locking element (13) extends essentially in a radial direction in relation to the insertion means (5) and has a height corresponding at least a quarter of the depth or width of the selected ring groove section (7'), wherein the locking element (13) comprises a tapered plane (16), which faces the insertion opening (9), wherein the plane (16), starting from a level of a surface (17) of the selected ring groove section (7'), is arranged increasing by the height of the locking stop (14), in particular.

4. The pipe plug connection (1) according to one of the preceding claims,
**characterized in that** the elastic ring (19) of the locking apparatus (11), which ring (19) comprises the support (12), directly abuts against an outer surface (28) of the socket (3) and covers a ring gap (31) between the socket (3) and the insertion means (5).

5. The pipe plug connection (1) according to Claim 4,
**characterized in that** the elastic ring (19) comprises a surrounding recess, which essentially corresponds to dimensions of the socket (3), such to undetachably fits to the circumference of the outer surface (28) of the socket (3).

6. The pipe plug connection (1) according to one of the preceding claims,
**characterized in that** the locking apparatus (11) comprises a drawback element (24,25), which allows to move the locking element (13) out of the locking position in the selected ring groove section (7'), in a direction opposite to the spring force of the support (12)
and **in that** the bar section (8') of the insertion element (5), which is arranged into the selected ring groove section (7'), by means of the revers moving of the locking element (13), does not lock between the locking stop (14) and the end stop (10), which allows the bayonet connection (6) to be releasable.

7. The pipe plug connection (1) according to Claim 6,
**characterized in that** the drawback element is configured as a handle (24) of the support (12).

8. The pipe plug connection (1) according to one of the preceding claims,
**characterized in that** the first connector pipe (2) and/or the second connector pipe (4) are configured as a housing portion or fittings of an armature for manipulating water flow or rather gas flow in distribution networks.

9. The pipe plug connection (1) according to Claim 8,
**characterized in that** the armature is selected of a group comprising apparatuses for manipulating water flow or rather gas flow in distribution networks, comprising hydrants, slide valves, shut-off dampers, valves, ball valves, reflux blockers and tapping armatures.

10. The pipe plug connection (1) according to Claim 8 or 9,
**characterized in that** the housing portion or a connector pipe (2,4), connector piece or blind plug, connectable to the housing portion, comprises the socket (3) on which the locking apparatus (11) is fitted or rather in which the locking apparatus (11) is incorporated.

11. The pipe plug connection (1) according to Claim 8 or 9,
**characterized in that** the housing portion or a connector pipe (2,4) or rather both connector pipes (2,4) which is or rather are connectable to the housing portion, comprises or rather comprise two or more asymmetrically arranged ring groove sections (7,7') and respective bar sections (8,8'), in order to allow a mutually defined radial extension.

12. The pipe plug connection (1) according to Claim 8 or 9,
**characterized in that** the housing portion or a connector pipe (2,4) or rather both connector pipes (2,4) which is or rather are connectable to the housing portion, comprises or rather comprise two or more ring groove sections (7,7') and bar sections (8,8'), which are arranged in regular intervals, wherein the length of the ring groove sections (7,7') differs and the length of the bar sections (8,8') differs, correspondingly, in order to allow a mutually defined radial extension.

## Revendications

1. Raccord à fiches pour tuyaux (1) comprenant :
(a) un premier tuyau de raccordement (2) avec un manchon (3) ;
(b) un deuxième tuyau de raccordement (4) avec un élément enfichable (5) pouvant être inséré dans le manchon (3) du premier tuyau de raccordement (2) ;
(c) un raccord à baïonnette (6) entre le manchon (3) et l'élément enfichable (5) des deux tuyaux de raccordement (2, 4), le raccord à baïonnette (6) comprenant au moins une section de rainure annulaire (7, 7') agencée dans le manchon (3) du premier tuyau de raccordement (2) et au moins une section de nervure (8, 8') agencée sur une périphérie extérieure (15) de l'élément enfichable (5) et étant conçu pour être fermé et rouvert par une rotation réciproque du manchon (3) et de l'élément enfichable (5), toutes les sections de rainure annulaire (7, 7') étant délimitées sur un côté par une ouverture d'insertion (9) et au moins une des sections de rainure annulaire (7, 7') étant délimitée de l'autre côté par une butée de fin de course (10), les sections de nervure (8, 8') étant adaptées dans leur agencement et dans leurs dimensions à l'installation par les ouvertures d'insertion (9) des sections de rainure annulaire (7, 7') et étant conçues de façon à pouvoir glisser dans ces sections de rainure annulaire (7, 7') ; et
(d) un dispositif (11) pour verrouiller un raccord à baïonnette fermé (6), le dispositif de verrouillage (11) étant installé sur le manchon (3) du premier tuyau de raccordement (2) et comprenant une fixation (12) avec un élément de blocage (13) mobile fixé sur cette dernière, la fixation (12) étant conçue pour exercer une force élastique, et l'élément de blocage (13) étant conçu sous la forme d'un tenon mobile qui peut être agencé dans une section de rainure annulaire (7') déterminée et comprend une butée de blocage (14) qui est éloignée de la butée de fin de course (10) de la section de rainure annulaire déterminée (7') d'au moins la longueur d'une section de nervure (8') à bloquer, l'élément de blocage (13) réalisé sous la forme d'un tenon étant agencé mobile et étant introduit dans une ouverture latérale (18) du manchon (3) agencée de façon essentiellement radiale et débouchant dans la section de rainure annulaire déterminée (7'), de sorte qu'à l'état fermé du raccord à baïonnette (6) et du fait de la force élastique de la fixation (12) il prend une position de blocage dans la section de rainure annulaire déterminée (7') et bloque une section de nervure (8') de l'élément enfichable (5) qui se trouve dans cette section de rainure annulaire déterminée (7') entre la butée de blocage (14) et la butée de fin de course (10) et empêche ainsi le raccord à baïonnette (6) de tourner,
**caractérisé en ce que** le dispositif de verrouillage (11) installé sur le manchon (3) du premier tuyau de raccordement (2) est réalisé sous la forme de la bague élastique (19) comprenant la fixation (12) qui entoure entièrement le manchon (3) du tuyau de raccordement (2) sur toute sa périphérie, et **en ce que** l'élément de verrouillage (13) est raccordé à la bague élastique (19) du dispositif de verrouillage (11).

2. Raccord à fiches pour tuyaux (1) selon la revendication 1, **caractérisé en ce que** la bague élastique (19) du dispositif de verrouillage (11) est réalisée sous la forme d'une bague métallique avec un élastomère, la fixation (12) étant raccordée à ce dispositif de verrouillage annulaire (11) par le biais d'éléments élastiques (20).

3. Raccord à fiches pour tuyaux (1) selon la revendication 1 ou 2, **caractérisé en ce que** la butée de blocage (14) de l'élément de blocage (13) est orientée de façon essentiellement radiale par rapport à l'élément enfichable (5) et présente une hauteur qui correspond au moins au quart de la profondeur ou de la largeur de la section de rainure annulaire déterminée (7'), l'élément de blocage (13) comprenant un plan oblique (16) orienté vers l'ouverture d'insertion (9) qui est réalisé essentiellement au niveau d'une surface (17) de la section de rainure annulaire déterminée (7') pour augmenter la hauteur de la butée de blocage (14).

4. Raccord à fiches pour tuyaux (1) selon l'une des revendications précédentes, **caractérisé en ce que** la bague élastique (19) comprenant la fixation (12) du dispositif de verrouillage (11) est installée directement sur une surface extérieure (28) du manchon (3) et recouvre une fente annulaire (31) entre le manchon (3) et l'élément enfichable (5).

5. Raccord à fiches pour tuyaux (1) selon la revendication 4, **caractérisé en ce que** la bague élastique (19) présente un évidement périphérique et essentiellement adapté aux dimensions du manchon (3) de sorte qu'elle vient se plaquer de manière imperdable contre le contour de la surface extérieure (28) du manchon (3).

6. Raccord à fiches pour tuyaux (1) selon l'une des revendications précédentes, **caractérisé en ce que** le dispositif de verrouillage (11) comprend un élément de retour (24, 25) avec lequel l'élément de blocage (13) peut être sorti de la position de blocage dans la section de rainure annulaire sélectionnée (7') dans le sens opposé de la force élastique de la fixation (12), et **en ce que** la section de nervure (8') de l'élément enfichable (5) se trouvant dans cette section de rainure annulaire déterminée (7'), de par le retrait de l'élément de blocage (13), n'est plus bloquée entre la butée de blocage (14) et la butée de fin de course (10) et **en ce que** le raccord à baïonnette (6) peut ainsi être de nouveau mobile.

7. Raccord à fiches pour tuyaux (1) selon la revendication 6, **caractérisé en ce que** l'élément de retrait est réalisé sous la forme d'une poignée (24) de la fixation (12).

8. Raccord à fiches pour tuyaux (1) selon l'une des revendications précédentes, **caractérisé en ce que** le premier tuyau de raccordement (2) et/ou le deuxième tuyau de raccordement (4) sont réalisés comme une pièce de boîtier ou une partie encastrée d'une armature pour affecter le flux d'eau ou le flux de gaz dans des réseaux de distribution.

9. Raccord à fiches pour tuyaux (1) selon la revendication 8, **caractérisé en ce que** l'armature est choisie à partir d'un groupe de dispositifs pour affecter le flux d'eau ou le flux de gaz dans des réseaux de distribution comprenant des bouches d'eau, des coulisseaux, des clapets d'arrêt, des soupapes, des robinets à boisseau sphérique, des clapets anti-retour et des soupapes perçables.

10. Raccord à fiches pour tuyaux (1) selon la revendication 8 ou 9, **caractérisé en ce que** la pièce de boîtier ou un tuyau de raccordement (2, 4), embout ou tampon borgne pouvant être raccordé à cette dernière comprend le manchon (3) sur lequel est monté le dispositif de verrouillage (11 ) ou dans lequel est intégré le dispositif de verrouillage (11).

11. Raccord à fiches pour tuyaux (1) selon la revendication 8 ou 9, **caractérisé en ce que** la pièce de boîtier ou un tuyau de raccordement (2, 4) ou les deux tuyaux de raccordement (2, 4) pouvant être raccordés à cette dernière dans le but d'une orientation radiale définie mutuellement comprennent deux ou plusieurs sections de rainure annulaire (7, 7') agencées de façon asymétrique et autant de sections de nervure correspondantes (8, 8').

12. Raccord à fiches pour tuyaux (1) selon la revendication 8 ou 9, **caractérisé en ce que** la pièce de boîtier ou un tuyau de raccordement (2, 4) ou les deux tuyaux de raccordement (2, 4) pouvant être raccordés à cette dernière dans le but d'une orientation radiale définie mutuellement présentent deux sections de rainure annulaire (7, 7') ou plus agencées de façon régulière et deux sections de nervures (8, 8') ou plus avec des sections de rainure annulaire (7, 7') de longueurs différentes et avec des sections de nervure (8, 8') de longueurs différentes correspondantes.
